# EUROPEAN PATENT SPECIFICATION

(11) **EP 4 486 620 B1**
(45) Date of publication and mention of the grant of the patent: **31.12.2025**
(21) Application number: 22707896.1
(22) Date of filing: 28.02.2022
(51) Int. Cl.: B61B 13/08, B61B 13/10, E01B 25/30, E01D 18/00, E01D 19/00, E01D 21/00, E01D 21/06, F16L 1/024

(54) **METHOD FOR ERECTING A TRANSPORTATION STRUCTURE**
VERFAHREN ZUM ERRICHTEN EINER TRANSPORTSTRUKTUR
PROCÉDÉ POUR ÉRIGER UNE STRUCTURE DE TRANSPORT

(43) Date of publication of application: 08.01.2025
(73) Proprietor: ArcelorMittal, 1160 Luxembourg (LU)
(72) Inventor: SELLITTO, Giuseppe, 4000 Liège (BE); GREMLING, Michaël, 4100 Seraing (BE); DI SILVESTRO, Elena, 4140 Sprimont (BE)
(74) Representative: Lavoix
(86) International application number: PCT/IB2022/051725
(87) International publication number: WO 2023/161680

(56) References cited:
- CN-A- 108 755 294
- KR-B1- 101 830 638
- US-A- 5 960 502
- US-A1- 2008 301 889
- US-A1- 2019 300 301

## Description

The present invention relates to a method for erecting a transportation structure comprising two assemblies of tube segments, each assembly being capable of being placed under low air pressure and through which pods may travel substantially free of air friction. This transportation system is often referred to as the hyperloop technology. The present invention also relates to the corresponding transportation structure.

Hyperloop technology is a proposed high-speed transportation system for both passenger and freight transport. It is basically a sealed system of tubes with low air pressure through which a pod may travel substantially free of air resistance or air friction. It has three major components: a tube, a pod and stations. The tube is a large sealed, low-pressure system that can be constructed above, below or on the ground. It contains the necessary infrastructure to ensure levitation/suspension, propulsion, braking... A vehicle runs inside this controlled environment and is often referred to as a pod. The pod employs electric levitation (either electro-magnetic or electro-dynamic) or aerodynamic levitation (using air-bearing skis) along with electromagnetic or aerodynamic propulsion to glide along a fixed guideway. A station is a facility where a pod can start or stop and where boarding/unboarding of passengers and loading/unloading of cargo are possible. A station is positioned at each extremity of the sealed system of tubes.

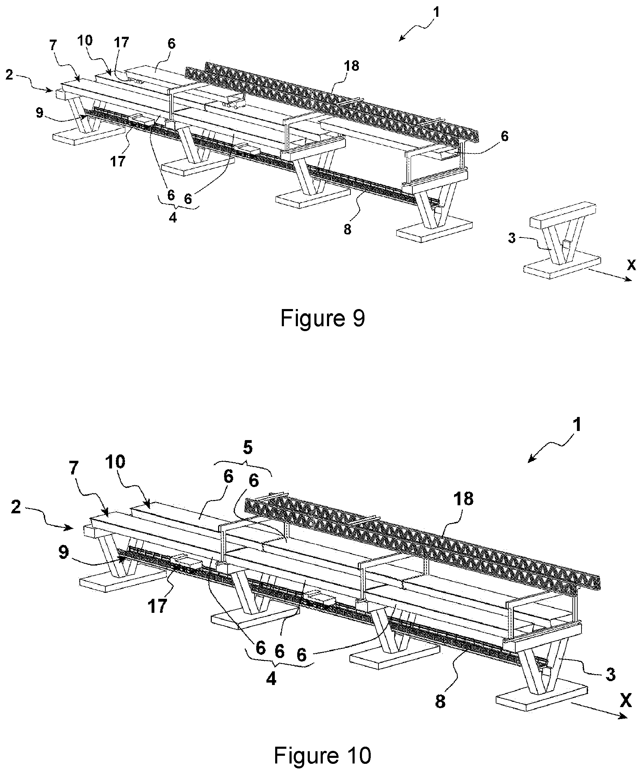

In the artists' views, an above-ground hyperloop structure is often represented in the form of tube segments whose ends simply rest on piers regularly spaced. This design is very appealing, but it does not provide a full understanding of important challenges during installation steps. One of these challenges is that the tube segments are huge pieces that cannot be easily transported to the construction site, even more so when the terrain is steep or difficult to access or if the hyperloop route is far away from existing roads. To avoid the transport of tube segments, it is known notably from US9517901 to manufacture and assemble the tubes on land with a movable tube fabrication machine (illustrated on Figure 9A) operable to move on land and directed along construction route. Alternatively, a moveable in-situ manufacturing system (illustrated on Figure 9B) may be located at a single location to make a number of tube sections (e.g., fifty tube sections), and then subsequently moved to a new location. In both cases, hyperloop routes can only be constructed if the moveable fabrication machine or the moveable manufacturing system can access the construction site. Moreover, among other drawbacks, it is worth mentioning that the energy supply might be tricky when moving along the construction route and, each time the machine/system would be moved, new electrical certifications may have to be obtained.

Documents US2019/300301A1, CN108755294A, KR101830638B1, US5960502A and US2008/301889A1 show relevant prior art, where US2019/300301A1 discloses a portion of a transportation structure suitable for pods travelling substantially free of air friction in an assembly of tube segments placed under low air pressure,the portion of the transportation infrastructure comprising a substructure comprising a plurality of piers, a first plurality of girders positioned on at least some of the piers and forming a first transportation pathway running from a first extremity of the substructure to a second one, a superstructure comprising a first assembly of tube segments positioned on the first transportation pathway and a second assembly of tube segments positioned on the same transportation pathway, both assemblies being capable of being placed under low air pressure and capable of allowing the circulation of pods travelling substantially free of air friction in the tube segments.

The aim of the present invention is therefore to remedy the drawbacks of the methods and structures of the prior art by providing a method for erecting an above-ground transportation structure which is compatible with rough terrains and for which the shipping of the different elements of the structure and their assembly is made easier.

For this purpose, a first subject of the present invention consists of a method for erecting a portion of a transportation structure comprising a first assembly of tube segments and a second assembly of tube segments, both assemblies being capable of being placed under low air pressure and through which pods may travel substantially free of air friction, the method comprising:
- (a) erecting a substructure comprising a plurality of piers, a first plurality of girders positioned on at least some of the piers and forming a first transportation pathway running from a first extremity of the substructure to a second one, a second plurality of girders positioned on at least some of the piers and forming a second transportation pathway, running from the first extremity of the substructure to the second one, alongside the first transportation pathway and a plurality of platforms, either positioned on the piers or connected to the girders of the first and/or second transportation pathway, and forming a service pathway running from the first extremity of the substructure to the second one, the erecting step comprising:
   o (i) Starting from the first extremity, conveying with vehicle(s) the nth girder of the first plurality of girders either along the first transportation pathway formed by the (n-1) girders of the first plurality of girders previously positioned or along the second transportation pathway formed by the (n-1) girders of the second plurality of girders previously positioned, positioning the nth girder at its use position and having the vehicle(s) return to the first extremity of the substructure along the service pathway,
   o (ii) starting from the first extremity, conveying with vehicle(s) the nth girder of the second plurality of girders along either the first transportation pathway or the second transportation pathway, positioning the nth girder at its use position and having the vehicle(s) return to the first extremity of the substructure along the service pathway,
   o (iii) Starting from the first extremity, conveying with vehicle(s) the yth platform of the plurality of platforms along either the first transportation pathway or the second transportation pathway, positioning the yth platform at its use position and having the vehicle(s) return to the first extremity of the substructure along the service pathway,
- (b) conveying, with vehicle(s), tube segments of the first assembly of tube segments along either the first transportation pathway or the second transportation pathway to the use position of each tube segment, positioning each tube segment and having the vehicle(s) return along the service pathway,
- (c) conveying, with vehicle(s), tube segments of the second assembly of tube segments along either the first transportation pathway or the second transportation pathway, from the first extremity of the substructure to the use position of each tube segment, positioning each tube segment and having the vehicle(s) return along the service pathway.

The method according to the invention may also have the optional features listed below, considered individually or in combination:
- the platforms of the plurality of platforms forming the service pathway are positioned on the piers,
- the platforms of the plurality of platforms forming the service pathway are connected to the girders of the first transportation pathway and to the girders of the second transportation pathway,
- the erecting step comprises, before sub-step i), a step of erecting the piers,
- the erecting step comprises, before sub-step i), an additional sub-step wherein a first section of the substructure comprising at least a pier, at least a girder from the first plurality of girders, at least a girder from the second plurality of girders and at least a platform is erected at a stocking site,
- in step a), the vehicles are set up with the girders and the platforms at the first extremity of the substructure,
- the girders and the platforms are positioned with a girder launcher crane supported by the substructure itself,
- the nth girder of the first plurality of girders is positioned after the girder of the first transportation pathway forming the second extremity of the substructure, the nth girder of the second plurality of girders is positioned after the girder of the first transportation pathway forming the second extremity of the substructure and the yth platform is positioned after the platform of the service pathway forming the second extremity of the substructure,
- in steps b) and c), the vehicles are set up with the tube segments at the first extremity of the substructure,
- in steps b) and c), the vehicles are set up with the tube segments either at the first extremity of the substructure or at the stocking position of the tube segments on one transportation pathway among the first one and the second one,
- steps b) and c) are done simultaneously.

A second subject of the invention consists of a portion of a transportation structure for pods travelling substantially free of air friction in an assembly of tube segments placed under low air pressure, the portion of the transportation infrastructure comprising:
- a substructure comprising a plurality of piers, a first plurality of girders positioned on at least some of the piers and forming a first transportation pathway running from a first extremity of the substructure to a second one, a second plurality of girders positioned on at least some of the piers and forming a second transportation pathway, running from the first extremity of the substructure to the second one, alongside the first transportation pathway and a plurality of platforms, either positioned on the piers or connected to the girders of the first and/or second transportation pathway, and forming a service pathway running from the first extremity of the substructure to the second one,
- a superstructure comprising a first assembly of tube segments positioned on the first transportation pathway and a second assembly of tube segments positioned on the second transportation pathway, both assemblies being capable of being placed under low air pressure and capable of allowing the circulation of pods travelling substantially free of air friction in the tube segments.

The portion of transportation structure according to the invention may also have the optional features listed below, considered individually or in combination:
- all the girders of the first plurality of girders are positioned successively and continuously one after the other along the longitudinal axis X of the portion of the transportation structure and all the girders of the second plurality of girders are positioned successively and continuously one after the other along the longitudinal axis X of the portion of the transportation structure,
- each of the first and second transportation pathways is composed of two continuous tracks of girders, running parallel to one another,
- the superstructure comprises a third assembly of tube segments positioned on the first assembly of tube segments and/or a fourth assembly of tube segments positioned on the second assembly of tube segments.

As it is apparent, the invention is based on the construction of a substructure composed of piers and girders which can withstand the transportation of heavy parts like girders, platforms or tube segments and which can support the superstructure composed of tube segments once the superstructure is positioned on the substructure. The substructure comprises a circulation loop so that, starting from a stocking site, vehicles circulating on the portion of the substructure already in place can transport each additional element of the transportation structure to its position at the construction site and return to the stocking site without preventing other vehicles from transporting the next elements to the construction site. The transportation structure can thus be easily constructed whatever the terrain.

Other characteristics and advantages of the invention will be described in greater detail in the following description.

The invention will be better understood by reading the following description, which is provided purely for purposes of explanation and is in no way intended to be restrictive, with reference to:
- Figure 1, which is a view of a portion of transportation structure according to a first variant of the invention,
- Figure 2, which is a view of a portion of transportation structure according to a second variant of the invention,
- Figure 3, which is a longitudinal cut of the portion of transportation structure of Figure 2,
- Figure 4, which is a detailed view of a portion of transportation structure according to a third variant of the invention,
- Figure 5, which illustrates the erection of the piers of a portion of transportation structure,
- Figure 6, which illustrates the erection of a first section of the substructure of a portion of transportation structure,
- Figure 7, which illustrates loading girders at the stocking site on vehicles positioned on a first section of the substructure of a portion of transportation structure,
- Figure 8, which illustrates conveying girders to the construction site along one of the transportation pathways of the substructure,
- Figure 9, which illustrates positioning girders at the construction site,
- Figure 10, which illustrates positioning platforms at the construction site,
- Figure 11, which illustrates loading tube segments at the stocking site on vehicles positioned on a first section of the substructure of a portion of transportation structure,
- Figure 12, which illustrates conveying tube segments to the construction site along one of the transportation pathways of the substructure,
- Figure 13, which illustrates positioning tube segments at the construction site,
- Figure 14, which illustrates conveying tube segments to the construction site along one of the transportation pathways of the substructure,
- Figure 15, which is a general view of a portion of transportation structure under construction.

It should be noted that spatially relative terms such as "lower", "beneath", "inward", "inwards", "outward", "outwards"... as used in this application refer to the positions and orientations of the different elements of the portion of transportation structure once the latter has been erected. "Upstream" and "downstream" as used in this application refer to the direction of assembling when starting from a stocking site.

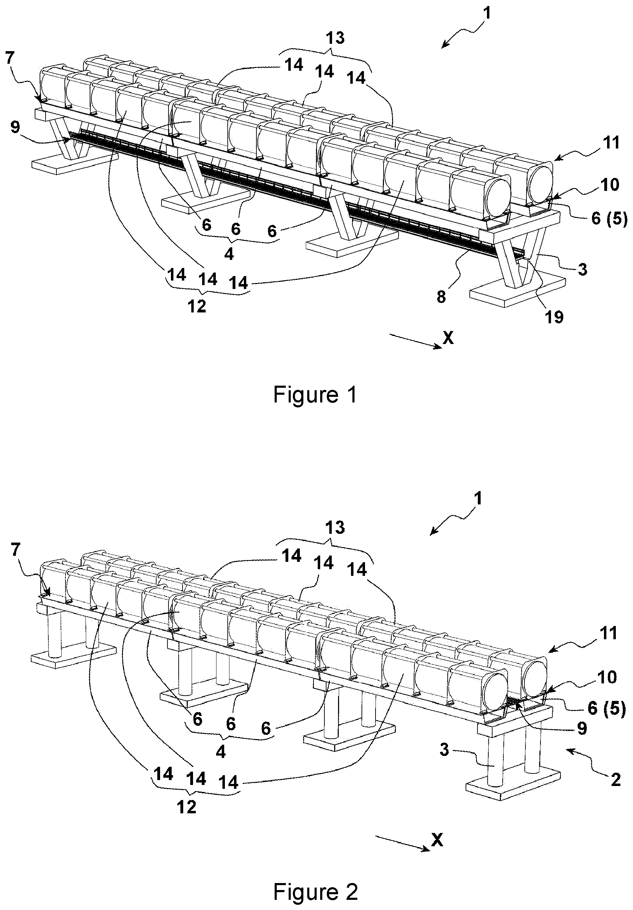

With reference to Figures 1 to 4, the portion of transportation structure 1 according to the invention first comprises a substructure 2 comprising a plurality of piers 3, a first plurality 4 of girders 6 positioned on at least a part of the piers (i.e. on at least some of the piers) and forming a first transportation pathway 7 running from a first extremity of the substructure to a second one, a second plurality 5 of girders 6 positioned on at least a part of the piers (i.e. on at least some of the piers) and forming a second transportation pathway 10, running from the first extremity of the substructure to the second one, alongside the first transportation pathway 7 and a plurality of platforms 8, either positioned on the piers or connected to the girders of the first transportation pathway, and forming a service pathway 9 running from the first extremity of the substructure to the second one.

A portion of transportation structure is composed of a plurality of sections, preferably at least 3 sections. A section is defined by the length of a girder. It preferably matches the distance between two consecutive piers along the longitudinal axis X of the portion of the transportation structure.

A pier 3 is an upright support for a structure or superstructure such as an arch or bridge. It supports the superstructure and transfers loads of the superstructure to the foundations. The shape of the piers according to the invention is not particularly limited as long as they can support the first and second above-mentioned transportation pathways, and optionally the service pathway.

According to a first variant illustrated on Figure 1, the piers are V-shaped. The V substantially extends in a plan perpendicular to the route, i.e. perpendicular to the girders' length. The piers comprise two inclined arms, extending outwards. Each arm can support one of the first and second transportation pathways. The piers according to this second variant can also comprise a pier cap, in the form of a horizontal beam linking the two arms. This pier cap provides additional seating for the girders and better distributes the load from the girders to the piers.

According to a second variant illustrated on Figure 2, the piers are pile bent piers, i.e. piers made of two or more columns supporting a pier cap. The piers substantially extend in a plan perpendicular to the route, i.e. perpendicular to the girders' length.

Optionally, the plurality of piers can be divided into a first plurality of piers and a second plurality of piers. The first plurality of piers supports the first plurality of girders and the second plurality of piers supports the second plurality of girders. The advantage of this design is that the space between the first and second transportation pathways and/or the level of the first and second transportation pathways can be easily adjusted to the topography of land.

Others shapes such as Y, X, H, hammerhead piers, cantilevered piers, trestle piers, solid piers, simple columns are also possible.

The piers are preferably substantially regularly spaced along the longitudinal axis X of the portion of the transportation structure.

The substructure 2 of the portion of transportation structure 1 according to the invention also comprises a first plurality 4 of girders 6 positioned on at least part of the piers 3 and forming a first transportation pathway 7 running from a first extremity of the substructure to a second one.

A girder 6 is a support beam used in construction. It can be made of steel or concrete or it can be a composite structure. It can be in the form of a I-beam cross section composed of two load-bearing flanges separated by a stabilizing web. It can be in the form of a plurality of longitudinal members joined by cross-members. In the variants illustrated in Figures 1 to 4, the girders are box girders, i.e. girders that form an enclosed tube with multiple walls. Box girders are advantageous notably in that electrical wires can be positioned inside.

Preferably each girder 6 extends from one pier to the adjacent one. In particular the first end of the girder rests on a given pier and the second end of the girder rests on an adjacent pier along the longitudinal axis X of the portion of the transportation route or structure. The girders can thus be easily installed by simply positioning them on the piers. Alternatively, a girder can extend on more than two piers.

The first plurality 4 of girders 6 is positioned along the longitudinal axis of the portion of the transportation route or structure, so as to form a first transportation pathway 7. By transportation pathway, it is meant at least one continuous track designed to withstand the transportation of heavy parts like girders, platforms or tube segments with vehicles and designed to support the superstructure once the latter is positioned on the transportation pathway. For the sake of clarity, a transportation pathway is a temporary pathway; it allows the transportation of elements only during the erecting phase. Once an assembly of tube segments has been positioned on the transportation pathway, the latter is not a pathway anymore. The transportation pathway extends from the first longitudinal extremity of the substructure to the second longitudinal extremity of the substructure, whatever the length of the substructure.

According to a first variant of the transportation pathway illustrated on Figures 1 to 3, the first transportation pathway 7 is composed of one single continuous track of girders. In other words, all the girders 6 of the first plurality 4 of girders are positioned successively and continuously one after the other along the longitudinal axis X of the portion of the transportation structure. In that case, the girders are large enough to have vehicles circulate on them. This transportation pathway can be a substantially flat surface of metal or of concrete, preferably the upper surface of the girders. It can also be a railroad line which is part of the upper surface of the girders.

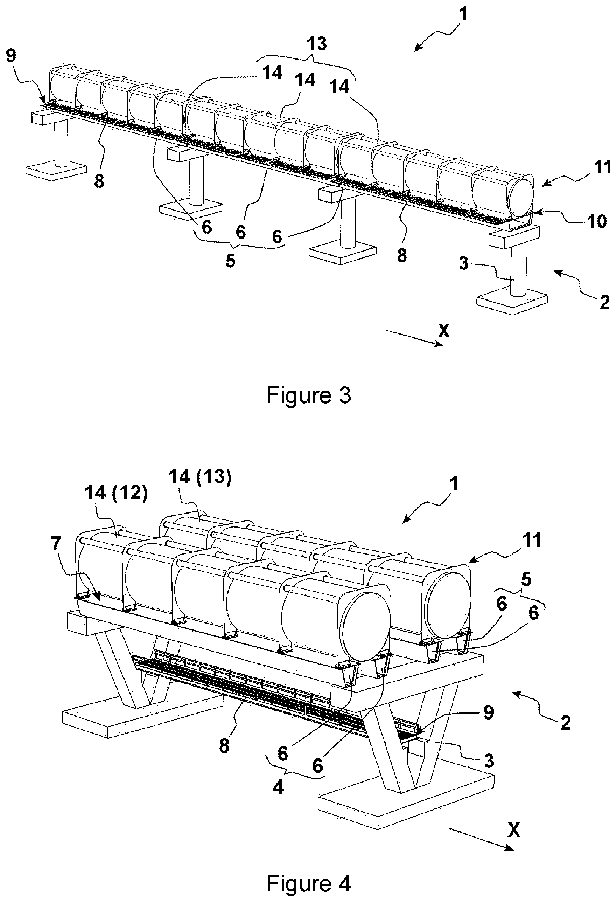

According to a second variant of the first transportation pathway 7 illustrated on Figure 4, the transportation pathway is composed of two continuous tracks of girders 6, running parallel to one another. In other words, half the girders 6 of the first plurality 4 of girders are positioned successively and continuously one after the other along the longitudinal axis of the portion of the transportation structure and half the girders 6 of the first plurality 4 of girders are positioned successively and continuously one after the other and parallel to the first half. In that case, the girders are not large enough to have vehicles circulate on them but the two continuous tracks are spaced from one another so that vehicles can circulate with their inward wheels on the inward track and their outward wheels on the outward track. Rail beams can be part of the upper surface of the girders so that the two continuous tracks form a railroad line.

The substructure 2 of the portion of transportation structure 1 according to the invention further comprises a second plurality 5 of girders 6 positioned on at least a part of the piers and forming a second transportation pathway 10, running from the first extremity of the substructure to the second one, alongside the first transportation pathway 7. The definition and variants detailed in relation to the first transportation pathway apply here. The definition and variants detailed in relation to the first plurality of girders apply here. Girders of the first plurality and girders of the second plurality can be identical to ease logistics.

The second transportation pathway 10 runs alongside the first transportation pathway 7. By alongside, it is meant that both transportation pathways are substantially parallel to each other and run adjacent to each other. It is not limited to transportation pathways at the same level and/or rigorously parallel. The space between the first and second transportation pathways and/or the level of the first and second transportation pathways can be adjusted to the topography of land.

The first plurality 4, respectively second plurality 5, of girders 6 can be positioned on all the piers as illustrated in the variants of Figures 1 to 4. Generally speaking, the first plurality 4, respectively second plurality 5, of girders 6 is positioned on all the piers when each pier extends transversely enough to support both the first plurality of girders and the second plurality of girders. Alternatively, the first plurality 4, respectively second plurality 5, of girders 6 is positioned only on a part of the piers, as in the case for example of piers in the form of columns where half of the piers support the first plurality of girders and half of the piers support the second plurality of girders.

Optionally, bearings are positioned between the piers and the girders. A bearing is a device which supports the girders and transfer loads and movements from the girders and superstructure to the substructure and foundation. The bearings permit controlled movement and decrease the stress involved.

Thanks to the first plurality 4 of girders 6 and to the second plurality 5 of girders 6, during the construction phase, vehicles circulating on the part of the substructure already in place can easily transport each additional element of the portion of transportation structure to its position. Access to the ground along the construction route is not necessary anymore. This advantage will be further detailed when describing the erection method. During operation, the first plurality of girders and the second plurality of girders support the tube segments and contribute to the straightness of the assemblies of tube segments. This straightness is important for the smooth traveling of the pods within the tube. Moreover, the combination of girders and tube segments acts as a beam which significantly increases the lateral torsional buckling of the structure.

The substructure 2 of the portion of transportation structure 1 according to the invention further comprises a plurality of platforms 8 positioned along the longitudinal axis X and forming a service pathway 9. By service pathway, it is meant at least one continuous track designed to withstand vehicle traffic. It differs from a transportation pathway in that it is not designed to withstand the transportation of heavy parts like girders, platforms or tube segments and it is not designed to support the superstructure. The service pathway extends from the first longitudinal extremity of the substructure to the second longitudinal extremity of the substructure, whatever the length of the substructure. For the sake of clarity, the service pathway is above ground. It runs substantially parallel to the first transportation pathway and optionally parallel to the second transportation pathway.

A platform is a light structure suitable for vehicle traffic. The platforms are preferably made of steel. They preferably comprise a traffic deck, i.e. a surface suitable for vehicle traffic, possibly reinforced underneath by longitudinal reinforcements and/or transversal reinforcements. These reinforcements add structural rigidity to the traffic deck. The traffic deck can also comprise safety rails along the longitudinal edges of the traffic deck for safety reasons. The traffic deck, the reinforcements and the safety rails are preferably made of steel. The traffic deck is preferably a perforated surface, like a perforated steel sheet or metal grid.

There are different ways to link the platforms 8 to the rest of the substructure 2. According to a first variant of the platform positioning, illustrated on Figures 1 and 4, the platforms 8 are supported by the piers 3. Preferably, the longitudinal ends of the platforms are supported by the piers. In that case, the platforms have preferably the same length as the girders.

Consequently, the piers can comprise a bearing area 19, which can be for example a portion of the shape itself of the piers or an anchor point added to the pier. In a case not illustrated, the piers comprise anchor points so that the platforms of the service pathway can be anchored to the piers. In the case illustrated on Figure 1, the bearing area 19 is in the form of a protrusion extending inwards from an arm of the V-shaped pier. In that case, the platforms of the service pathway, in particular their longitudinal ends, can simply rest on the protrusions. Preferably, the two arms comprise a bearing area. More preferably, the bearing areas of the two arms of a given pier are substantially flush, i.e. at the same level, so that the platforms of the service pathway can more stably rest on the bearing areas. Alternatively, the platforms of the service pathway can rest on other parts of the pier, such as the pier cap if applicable or the horizontal beam of a H-shaped pier if applicable.

For this first variant of the platform positioning, the service pathway 9 can run in-between the first and the second transportation pathways, at the same level or not. On Figure 1, the service pathway is positioned transversally between the first transportation pathway and the second transportation pathway and vertically below the first transportation pathway and the second transportation pathway. In particular, a platform is positioned transversally between a girder of the first plurality of girders and a girder of the second plurality of girders and vertically below these two girders. This position is very convenient for the circulation of vehicles on the substructure during the construction phase as it will be further detailed when describing the erection method. Other positions of the service pathway are of course possible depending on the design of the piers and the position of the bearing areas.

According to a second variant of the platform positioning, illustrated on Figures 2 and 3, the platforms are supported by the girders. In that case, the platforms can have the same length as the girders or can be of shorter length, preferably so that the platform's length is a divisor of the girder's length. Preferably, the platforms are positioned in-between the girders of the first transportation pathway 7 and the girders of the second transportation pathway 10. More preferably, the first longitudinal edge of the platforms rests on the inward longitudinal edge of a girder 6 from the first plurality 4 of girders and the second longitudinal edge of the platforms rests on the inward longitudinal edge of a girder 6 from the second plurality 5 of girders. The platform can be at the same level as the girders or not. In particular, the traffic deck of the platforms can be at the level of the upper surface of the girders, or above or below. It is preferably at the level of the upper surface of the girders to ease vehicle traffic.

Thanks to the service pathway 9, during the construction phase, the vehicles having moved an element to the construction site can return to the stocking site without preventing other vehicles from transporting the next elements to the construction site. It speeds up the transportation of the elements to the construction site and thus shortens the erection phase. This advantage will be further detailed when describing the erection method. During operation, the service pathway can be advantageously used for maintenance, inspection and/or as an escape route. The service pathway can be permanent or temporary.

With reference to Figures 1 to 4, the transportation structure according to the invention further comprises a superstructure 11 comprising a first assembly 12 of tube segments 14 positioned on the first transportation pathway, the first assembly being capable of being placed under low air pressure and capable of allowing the circulation of pods travelling substantially free of air friction in the tube segments By "low air pressure", it is meant an air pressure below atmospheric pressure, preferably below or equal to 10 kPa, more preferably between 10 Pa and 10 kPa.

The design of the tube segments 14 is not limited as long as they can be connected to one another, by their longitudinal ends, directly or indirectly, along the longitudinal axis so as to form an assembly as described above. In particular, the cross-section of the tube is not limited. It can notably be a circular cross-section or a polygonal cross-section. Practically speaking, the capability of the assembly to be placed under low air pressure is conferred by the features of the tube segment wall, the features of the connection between tube segments and the pumping equipment. In particular, the tube segment wall has to be airtight. Different ways of making a tube wall airtight are well known and the person skilled in the art will know how to select the features of the wall in each specific case. It can be for example a metallic tube made of welded plates or a metallic structure covered by an airtight membrane. Also, the connection between two tube segments has to be airtight. The airtightness of the connection can notably be provided by welding, by the addition of components such as an elastomer between tube segments that are bolted or clamped, or by means of an expansion joint. The person skilled in the art knows how to make connections airtight and will adapt the connection to each specific case. Also, the pumping equipment has to be correctly dimensioned so that a low air pressure can be reached and maintained in the assembly of tube segments, while taking into account the air leakages under operation. The person skilled in the art knows how to do so and will adapt the pumping equipment to each specific case.

Practically speaking, the capability of the assembly to allow the circulation of pods travelling substantially free of air friction in the tube segments is conferred by the infrastructure positioned inside the tube segments and which provide notably the levitation/suspension, propulsion, braking... Such infrastructures are already well known and the person skilled in the art will know how to adapt the infrastructure to each specific case.

Preferably, tube segments comprise legs distributed along the length of the segment and suitable for a tube segment to stand alone on the substructure on its legs. The number of legs and their position on the tube segment can be optimized during the structural design phase.

The tube segments are preferably made of steel. Steel has the advantages of being light, easily vacuum-tight and recyclable.

The tube segments can be connected to external and/or internal components along their length and/or at their ends. These components can be very diverse. To name a few of them, they can be stiffeners, photovoltaic panels, sensors...

With reference to Figures 1 to 4, the superstructure 11 according to the invention further comprises a second assembly 13 of tube segments 14 positioned on the second transportation pathway, the second assembly being capable of being placed under low air pressure and capable of allowing the circulation of pods travelling substantially free of air friction in the tube segments. The characteristics and variants of the tube segments of the first assembly detailed above also apply to the tube segments of the second assembly. Tube segments of the first assembly and tube segments of the second assembly can be identical to ease logistics.

According to one variant, the superstructure 11 according to the invention further comprises a third assembly of tube segments 14 positioned on the first assembly 12 of tube segments and/or a fourth assembly of tube segments 14 positioned on the second assembly 13 of tube segments. In particular each tube segment of the third assembly of tube segments is positioned on a tube segment of the first assembly of tube segments and/or each tube segment of the fourth assembly of tube segments is positioned on a tube segment of the second assembly of tube segments. This positioning limits the footprint of the transportation structure. It also reduces the amount of switches and facilitates surface use, in particular for deviating towards stations. Optionally, each tube segment of the first assembly of tube segments is coupled to a tube segment of the third assembly of tube segments before being conveyed to the construction site. Similarly, each tube segment of the second assembly of tube segments is coupled to a tube segment of the fourth assembly of tube segments before being conveyed to the construction site. The coupling can be done with transversal connectors and/or with a structure surrounding the two tube segments. In that case, the assemblies of tube segments are conveyed along either the first transportation pathway 7 or the second transportation pathway 10 as it will be further detailed when describing the erection method. It speeds up the transportation of the elements to the construction site and thus shortens the erection phase. According to that variant, the transportation pathways can be made of a plurality of girders 6 indifferently laid out in one single continuous track of girders or in two continuous tracks of girders 6, running parallel to one another.

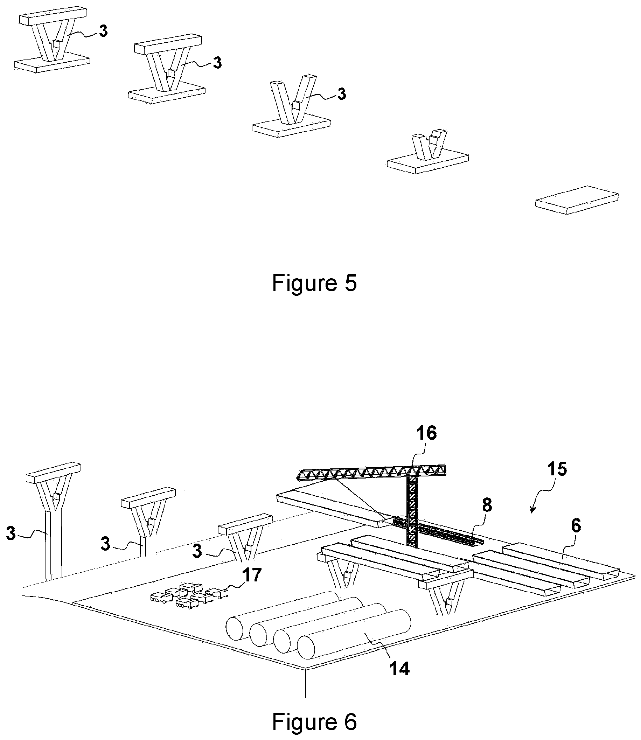

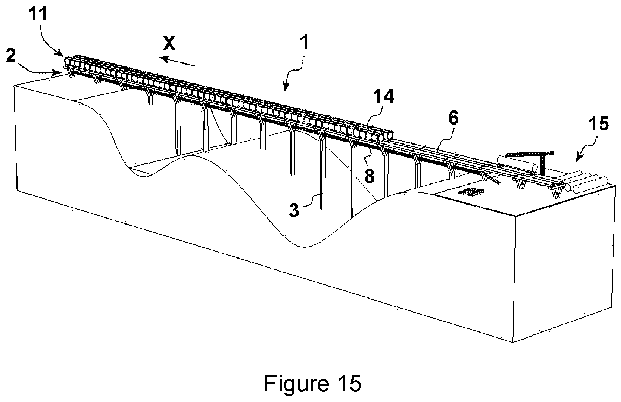

With reference to Figures 5 to 15, the method for erecting the portion 1 of the transportation structure according to the invention will now be described. Overall, this method comprises a first step of erecting the substructure 2 and a second step of erecting the superstructure 11. The step of erecting the substructure is described first.

In a first step of erecting the substructure 2, the piers 3 of the portion 1 of the transportation structure are erected. They can be erected with any suitable method, such as panel formwork for example. Their erecting method includes the erection of piers foundations as required by the nature of the ground. This step can be done before the step of positioning the girders 6 or at least partially at the same time as the step of positioning the girders. In other words, the piers can be erected well before the girder positioning starts, for example weeks before. This notably gives time for concrete drying and soil compaction. Alternatively, some piers are still being erected when the girder positioning starts on the first erected piers.

As the footprint for erecting piers is limited and only light-duty vehicles are needed (bulldozers, concrete mixer trucks), the piers are preferably erected by ground access to the construction site of each pier.

In a second step of erecting the substructure 2, the girders 6 and platforms 8 of the portion 1 of transportation structure are erected.

As mentioned above, the erection of girders and platforms starts from a stocking site 15 where at least part of the elements of the transportation structure are stocked. Depending on the ease of transporting the elements up to the stocking site, some elements can be manufactured at the stocking site in manufacturing facilities. It can for example be the case of the girders and/or of the tube segments which are massive pieces. Manufacturing some elements on the stocking site minimizes the erection time at the construction site and it allows for better quality control of the manufactured elements.

The stocking site 15 is preferably located at the future site of a station, in particular a passenger and/or freight station. This limits the footprint of the construction phase. It also limits the civil work. In particular, the civil work done to build the stocking site and its optional manufacturing facilities can be used for erecting the station. The stocking site is preferably located at the ground level.

As illustrated on Figure 6, the first sub-step in erecting the girders 6 and platforms 8 is at the stocking site 15. This sub-step comprises the erection, at the stocking site, of a first section of the substructure comprising at least one pier 3, at least a girder 6 from the first plurality of girders, at least a girder 6 from the second plurality of girders and at least a platform 8. In particular, this sub-step comprises positioning a girder from the first plurality of girders on at least one pier and positioning a girder from the second plurality of girders on at least one pier. More particularly, the girder of the first plurality and the girder of the second plurality are positioned on the same at least one pier. This positioning is preferably done with a crane 16 which can pick the elements on the stocking site and move them to the piers. The assembling order of the girder(s) and platform(s) can vary depending on the design of the substructure and notably depending on how the platform is linked to the rest of the substructure.

According to a first variant, the first section of substructure comprises one single pier. This is notably the case when the stocking site is positioned on a high ground. The first extremity of the first girder of the first plurality of girders can then rest on the high ground while its second extremity can rest on the pier positioned downhill. Similarly, the first extremity of the first girder of the second plurality of girders can rest on the high ground while its second extremity can rest on the pier positioned downhill. In that case, the first sub-step comprises positioning a girder from the first plurality of girders between the high ground and the pier and positioning a girder from the second plurality of girders between the high ground and the pier.

According to a second variant illustrated on Figure 6, the first section of substructure comprises two piers. This is notably the case when the stocking site is positioned on a substantially flat ground. The first extremity of the first girder of the first plurality of girders can then rest on the first pier while its second extremity can rest on the second pier. Similarly, the first extremity of the first girder of the second plurality of girders can rest on the first pier while its second extremity can rest on the second pier. In that case, the first sub-step comprises positioning a girder from the first plurality of girders on the two piers and positioning a girder from the second plurality of girders on the two piers.

This first sub-step can comprise the erection, at the stocking site, of other sections of the substructure. The number of sections erected at the stocking site is conditioned by the ability of the crane from the stocking site to position the elements on the piers.

Once the first section of the substructure has been erected, it comprises a first extremity adjacent to the stocking site and a second extremity at its opposite end. The first extremity of the first section corresponds to the first extremity of the substructure of the portion of transportation structure erected according to the invention. Consequently, the position of the first extremity of the substructure of the portion of transportation structure erected according to the invention will not change over time during the erection of the portion of transportation structure. As for the second extremity of the first section, it corresponds to the second extremity of the substructure under construction, as long as no other section of substructure has been erected downstream of the first section. In other words, the position of the second extremity of the substructure under construction will change over time each time a new section is erected downstream of the already erected sections of transportation structure.

Thanks to the elements composing the erected substructure, vehicles 17 can circulate on the first transportation pathway 7 formed by at least one girder 6 of the first plurality 4 of girders, on the second transportation pathway 10 formed by at least one girder 6 of the second plurality 5 of girders and on the service pathway 9 formed by at least one platform 8. In particular, vehicles moving the elements to be positioned along the construction route can circulate on the first transportation pathway and/or the second transportation pathway, starting from the first extremity and up to the second extremity of the substructure under construction. Once the elements have reached their use position, the vehicles can return to the first extremity via the service pathway.

Consequently, in a second sub-step in erecting the girders 6 and platforms 8, another section of the substructure can be erected as detailed hereafter. This section is referred to below as "the second section" for simplicity, assuming that only a first section has been erected at the stocking site.

The second section of the substructure comprises at least one girder 6 of the first plurality 4 of girders, at least one girder 6 of the second plurality 5 of girders, at least one platform 8 of the plurality of platforms and at least one pier 3 of the substructure.

As explained above with regard to the pier erection, at least an additional pier has been erected downstream of the first section of the substructure.

Vehicles 17 suitable for the transport of heavy elements are positioned on the first section of the substructure, in particular on the first transportation pathway 7 and/or on the second transportation pathway 10, more particularly on the first girder 6 of the first plurality 4 of girders and/or on the first girder 6 of the second plurality 5 of girders. The vehicles can be lifted with a crane 16 or can reach their position with an access ramp or any other suitable equipment. The type of vehicles is not limited. It can be wheeled vehicles, such as trucks or train locomotives. Depending on the type of vehicles, the element(s) to be transported can be either loaded on one vehicle or loaded on several vehicles at the same time or the vehicle can be simply connected to the element(s), as in the case of a train locomotive for the transport of element(s) equipped of railroad wheels. In this description, the terms "set up" and "pair" are used to designate equally the loading of the vehicle(s) with an element and the connection of the vehicle(s) with an element. The term "freed" is used to designate equally the unloading of an element from the vehicle(s) and the disconnection of the vehicle(s) with an element.

Some vehicles are set up with the girder(s) and platform(s) of the second section of the substructure. In particular, vehicle(s) are set up with at least one girder 6 of the first plurality 4 of girders, vehicle(s) are set up with at least one girder 6 of the second plurality 5 of girders and vehicle(s) are set up with at least one platform 8. The elements can be conveyed from the stocking site on the first section of the substructure or can be lifted from the stocking site up to the first section of the substructure with a crane. In the first case, they can be conveyed by the vehicles themselves. In the second case, the vehicles can be positioned and then set up.

The elements are then conveyed with the vehicles from the first extremity to the second extremity of the substructure under construction, which is adjacent to their use position. In particular:
- The at least one girder 6 of the first plurality 4 of girders is conveyed either along the first transportation pathway 7 formed by the girder(s) of the first plurality of girders positioned on the first section of substructure or along the second transportation pathway 10 formed by the girder(s) of the second plurality of girders positioned on the first section of substructure,
- The at least one girder 6 of the second plurality 5 of girders is conveyed along either the first transportation pathway 7 or the second transportation pathway 10,
- The at least one platform 8 is conveyed along either the first transportation pathway 7 or the second transportation pathway 10.

The order in which the elements are paired with vehicles and conveyed to the second extremity is not limited. Also, some elements can be conveyed to the second extremity while others are still being set up on vehicles.

Once an element has been conveyed to the second extremity of the substructure under construction, it is positioned at its use position, i.e. its position of service in the substructure. In particular:
- The at least one girder 6 of the first plurality 4 of girders is positioned downstream of the first transportation pathway 7. In particular, it is positioned after the girder of the first transportation pathway forming the second extremity of the substructure under construction. More particularly, it is positioned in line with the girder 4 of the first transportation pathway 7 forming the second extremity along the longitudinal axis X. Even more particularly, it is positioned so that a first end of the girder rests on the pier forming the second extremity of the first section of substructure and a second end of the girder rests on the at least one additional pier erected downstream of the first section of substructure. The at least one girder of the first plurality of girders is preferably positioned with a crane 18, more preferably with a girder launcher crane, supported by the substructure itself.
- The at least one girder 6 of the second plurality 5 of girders is further positioned downstream of the second transportation pathway 10. In particular, it is positioned after the girder of the second transportation pathway forming the second extremity of the substructure under construction. More particularly, it is positioned in line, along the longitudinal axis, with the girder of the second transportation pathway forming the second extremity. Even more particularly, it is positioned so that a first end of the girder rests on the pier forming the second extremity of the first section of substructure and a second end of the girder rests on the additional pier erected downstream of the first section of substructure. The at least one girder of the second plurality of girders is preferably positioned with the crane 18, more preferably with the girder launcher crane.
- The at least one platform 8 is positioned downstream of the service pathway 9. In particular, it is positioned after the platform of the service pathway forming the second extremity of the substructure under construction. More particularly, it is positioned in line, along the longitudinal axis X, with the platform of the service pathway forming the second extremity. Even more particularly, it is positioned so that a first end of the platform rests on the pier forming the second extremity of the first section of substructure and a second end of the platform rests on the additional pier erected downstream of the first section of substructure. The at least one platform is preferably positioned with the crane, more preferably with the girder launcher crane.

The use of a crane 18 supported by the substructure is beneficial. It further limits the footprint of the erection by eliminating the need for ground access to the construction site and ground preparation for a crane. It also makes the erecting method further independent of the topography and roughness of the terrain.

Once an element has been positioned, the corresponding freed vehicle(s) can return to the first extremity of the substructure along the service pathway. In particular:
- The vehicle(s) 17 freed from the at least one girder 6 of the first plurality 4 of girders is moved from either the first or second transportation pathway 7, 10 to the service pathway 9. In the case where the service pathway is not at the level of either the first or second transportation pathway, the vehicle(s) can be lifted by a crane and put down on the service pathway. Preferably it is lifted with the girder launcher crane.
- The vehicle(s) 17 freed from the at least one girder 6 of the second plurality 5 of girders is moved from either the first or second transportation pathway 7, 10 to the service pathway 9. In the case where the service pathway is not at the level of either the first or second transportation pathway, the vehicle(s) can be lifted by a crane and put down on the service pathway. Preferably it is lifted with the girder launcher crane.
- The vehicle(s) 17 freed from the at least one platform 8 is moved from either the first or second transportation pathway 7, 10 to the service pathway 9. In the case where the service pathway is not at the level of either the first or second transportation pathway, the vehicle(s) can be lifted by a crane and put down on the service pathway. Preferably it is lifted with the girder launcher crane.

The order in which the elements are positioned is not limited. Also, some elements can be positioned while others are still being paired with vehicles or conveyed to the second extremity. Preferably, the at least one platform 8 is positioned first so that the vehicle(s) freed from the at least one girder 6 of the first plurality 4 of girders and/or of the at least one girder 6 of the second plurality 5 of girders, can be more easily transferred to the service pathway.

Once a second section of the substructure has been erected as detailed above, other sections of the substructure can be erected in sequence according to a similar process and as detailed below in relation to the erection of the xth section of the substructure. By "in sequence", it is meant that each section of the substructure is erected one after the other, by repeatedly conveying and positioning at least one girder of the first plurality, at least one girder of the second plurality and at least one platform. The order in which the at least one girder of the first plurality, the at least one girder of the second plurality and the at least one platform of one section are conveyed and positioned is not limited.

The xth section of the substructure comprises at least the nth girder 6 of the first plurality 4 of girders, at least the nth girder 6 of the second plurality 5 of girders, at least the yth platform 8 of the plurality of platforms and at least the zth pier 3 of the substructure. By default, x, y, z and n are different. In case where each section of the substructure comprises one single girder of the first plurality of girders, one single girder of the second plurality of girders and one single platform, x is equal to n and y. In that case, the nth girder of the first plurality of girders is also the xth, the nth girder of the second plurality of girders is also the xth and the yth platform of the plurality of platforms is also the xth. In case where the first section comprises 2 piers and both transportation pathways are composed of one single continuous track of girders and each section of the substructure other than the first one comprises one single pier, z is equal to n+1.

At least the zth pier 3 has first been erected downstream of the (x-1) first sections.

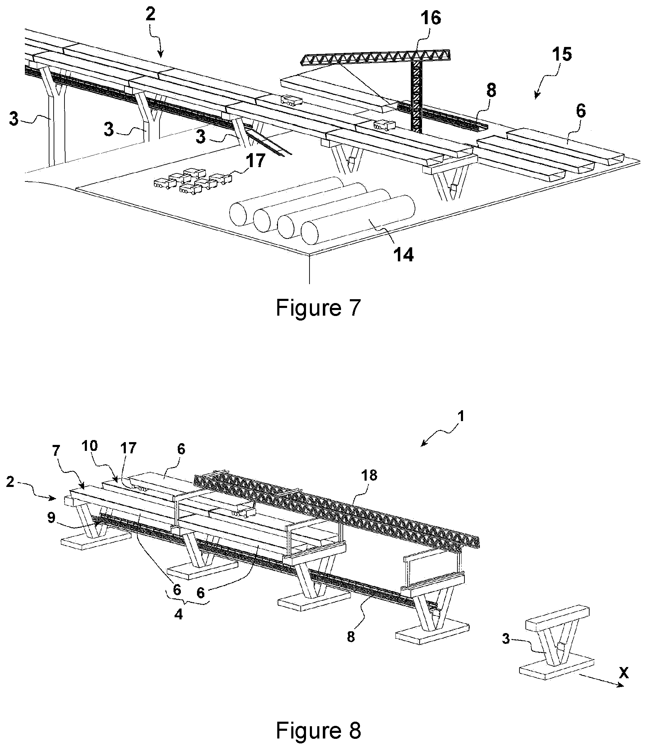

As illustrated on Figure 7, the vehicles 17 which have returned to the first extremity of the substructure after being freed from the girder(s) and platform(s) of a previous section(s) of the substructure are set up with the girder(s) and platform(s) of the xth section of the substructure. In particular, vehicle(s) are set up with the nth girder of the first plurality of girders, vehicle(s) are set up with the nth girder of the second plurality of girders and vehicle(s) are set up with the yth platform of the plurality of platforms. If the xth section comprises additional girder(s) and/or platform(s), they are paired with the vehicles similarly.

As illustrated on Figure 8, starting from the first extremity of the substructure, the girder(s) 6 and platform(s) 8 of the xth section of the substructure are conveyed with vehicles from the first extremity to the second extremity of the substructure under construction, adjacent to their use position. In particular:
- The nth girder 6 of the first plurality 4 of girders is conveyed either along the first transportation pathway 7 formed by the girders of the first plurality of girders previously positioned or along the second transportation pathway 10 formed by the girders of the second plurality of girders previously positioned. In particular, it is conveyed either along the first transportation pathway 7 formed by the (n-1) girders of the first plurality of girders previously positioned or along the second transportation pathway 10 formed by the (n-1) girders of the second plurality of girders previously positioned
- The nth girder 6 of the second plurality 5 of girders is conveyed along either the first transportation pathway 7 or the second transportation pathway 10,
- The yth platform 8 of the plurality of platforms is conveyed along either the first transportation pathway 7 or the second transportation pathway 10.

If the xth section comprises additional girder(s) and/or platform(s), they are conveyed similarly. The order in which the elements are paired with vehicles and conveyed to the second extremity is not limited. Also, some elements can be conveyed to the second extremity while others are still being paired with vehicles.

According to one variant, the nth girder of the first plurality 4 of girders is conveyed along the first transportation pathway 7 while the nth girder 6 of the second plurality 5 of girders is conveyed along the second transportation pathway 10. It further speeds up the erecting process and limit the move of girders at their use position. According to another variant, the nth girder of the first plurality 4 of girders, the nth girder 6 of the second plurality 5 of girders and the yth platform are conveyed along the same transportation pathway. It can notably be the case when one of the transportation pathways is used to stock tube segments, as it will be detailed later on.

As illustrated on Figures 9 and 10, once an element has been conveyed to the second extremity of the substructure under construction, it is positioned at its use position. In particular:
- The nth girder 6 of the first plurality of girders is positioned downstream of the first transportation pathway 7. In particular, it is positioned after the girder of the first transportation pathway forming the second extremity of the substructure under construction. More particularly, it is positioned in line, along the longitudinal axis, with the (n-1)th girder of the first transportation pathway. Even more particularly, it is positioned so that a first end of the nth girder rests on the pier forming the second extremity (the (z-1)th pier) and a second end of the nth girder rests on the zth pier erected downstream of the substructure. The nth girder of the first plurality of girders is preferably positioned with a crane 18, more preferably with a girder launcher crane, supported by the substructure itself,
- The nth girder 6 of the second plurality 5 of girders is further positioned downstream of the second transportation pathway 10. In particular, it is positioned after the girder of the second transportation pathway forming the second extremity of the substructure under construction. More particularly, it is positioned in line, along the longitudinal axis, with the (n-1)th girder of the second transportation pathway. Even more particularly, it is positioned so that a first end of the nth girder rests on the pier forming the second extremity (the (z-1)th pier) and a second end of the nth girder rests on the zth pier erected downstream of the substructure. In other words, it is positioned alongside the nth girder of the first plurality. The nth girder of the second plurality of girders is preferably positioned with the crane 18, more preferably with the girder launcher crane,
- The yth platform 8 is positioned downstream of the service pathway. In particular, it is positioned after the (y-1)th platform of the service pathway, i.e. the platform of the service pathway forming the second extremity of the substructure under construction. More particularly, it is positioned in line, along the longitudinal axis, with the platform of the service pathway forming the second extremity. Even more particularly, it is positioned so that a first end of the yth platform rests on the pier forming the second extremity (the (z-1)th pier) and a second end of the yth platform rests on the zth pier erected downstream of the substructure. The yth platform is preferably positioned with a crane 18, more preferably with a girder launcher crane, supported by the substructure itself.

As illustrated on Figures 9 and 10, once an element of the xth section of substructure has been positioned, the corresponding freed vehicle(s) can return to the first extremity of the substructure along the service pathway. In particular:
- The vehicle(s) freed from the nth girder of the first plurality of girders is moved from either the first or second transportation pathway 7, 10 to the service pathway 9,
- The vehicle(s) freed from the nth girder of the second plurality of girders is moved from either the first or second transportation pathway 7, 10 to the service pathway 9,
- The vehicle(s) freed from the nth platform is moved from either the first or second transportation pathway 7, 10 to the service pathway 9.

In the case where the service pathway is not at the level of either the first or second transportation pathway, the vehicle(s) can be lifted by a crane and put down on the service pathway. Preferably it is lifted with the girder launcher crane.

If the xth section comprises additional girder(s) and/or platform(s), they are positioned similarly and the corresponding vehicles return to the first extremity similarly. The order in which the elements of the xth section are positioned is not limited. In the case where the nth girder of the first plurality 4 of girders, the nth girder 6 of the second plurality 5 of girders and the yth platform are conveyed along the same transportation pathway, the girders are positioned alternately downstream of the first transportation pathway 7 and downstream of the second transportation pathway 10, preferably with the help of the girder launcher crane. Also, some elements of the xth section can be positioned while other elements of the xth section or of subsequent sections are being paired with vehicles or conveyed to the second extremity. Preferably, the yth platform 8 is positioned first so that the vehicle(s) conveying the nth girder of the first plurality of girders and the nth girder of the second plurality of girders can be more easily transferred from either the first or second transportation pathway to the service pathway.

At the end of the step of erecting the substructure, the last girder of the first plurality of girders and the last girder of the second plurality of girder are positioned on the last piers of the substructure. These piers can be adjacent to or shared with a second portion of transportation structure erected or being erected as an extension of the relevant portion of transportation structure along the longitudinal axis of the transportation route. This second portion of transportation structure is erected from a second stocking site, possibly at the future site of a station, located downstream of the relevant portion. This second portion of transportation structure is built by erecting its substructure backwards of the erection of the substructure of the relevant portion. In other words, each portion is built from a stocking site in direction of another stocking site and at some point, the two portions join. The last girder of the first plurality of girders of the relevant portion is thus adjacent to the last girder of the first plurality of the second portion so that there is a continuity in the first transportation pathway. Similarly, the last girder of the second plurality of girders of the relevant portion is adjacent to the last girder of the second plurality of the second portion so that there is a continuity in the second transportation pathway.

Once all the sections of the substructure of the portion of the transportation structure have been assembled in sequence, the superstructure can be erected.

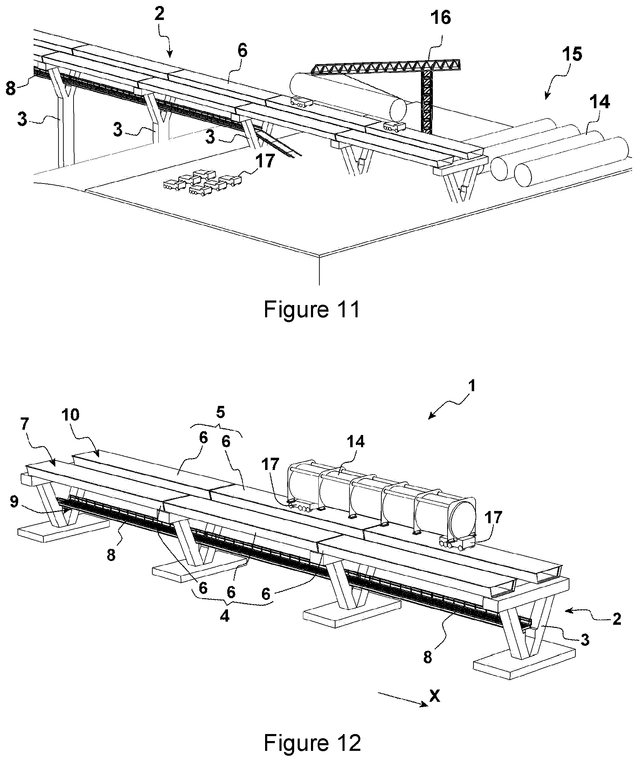

Overall, and as illustrated on Figures 11 to 15, the superstructure assembling is done by conveying, with vehicles, tube segments 14 along either the first transportation pathway 7 or the second transportation pathway 10 to the use position of each tube segment, positioning each tube segment and having the vehicles return along the service pathway 9. As the tube segments are positioned on the substructure and block the transportation pathway(s), the superstructure assembling is done backwards compared to the substructure assembling. In other words, the tube segments are first positioned at the second extremity of the substructure and then positioned one in front of the other in direction of the first extremity of the substructure, i.e. one upstream of the other.

In particular, in a first step illustrated on Figures 11 to 13, a first tube segment 14 is conveyed with vehicle(s) 17 to the second extremity of the substructure 2, which is its use position. The vehicle(s) are freed from the first tube segment and can return along the service pathway 9. The first tube segment 14 is positioned on the last girder 6, of either the first transportation pathway or the second transportation pathway, forming the second extremity of the substructure. Freeing the vehicle from the tube segment and positioning the tube segment can be done with a crane, possibly a girder launcher crane. In the case where a second portion of transportation structure is adjacent to the last girder of the substructure, the first tube segment can be connected to a tube segment of the second portion, preferably in an airtight connection.

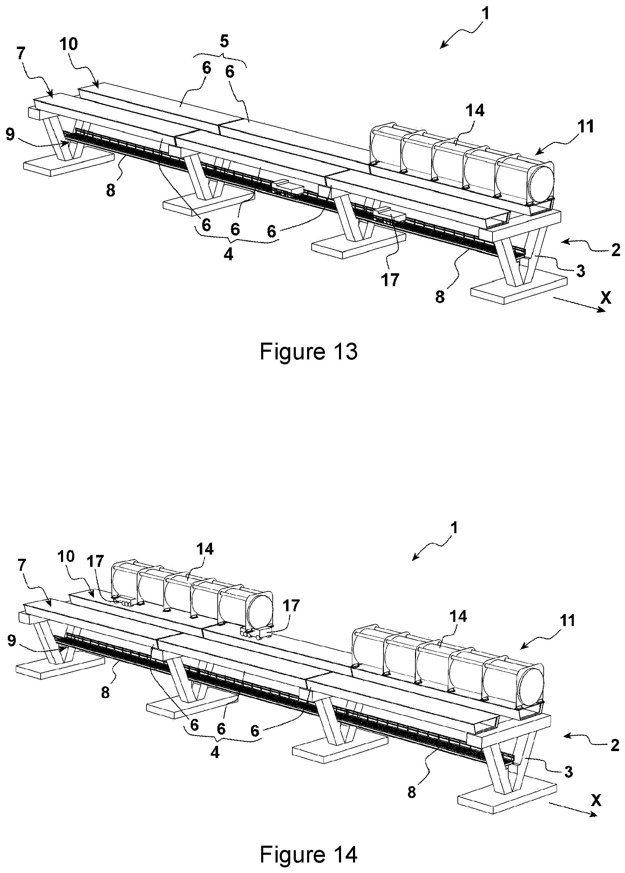

In a second step illustrated on Figure 14, a second tube segment 14 is conveyed with vehicle(s) 17 up its use position. The vehicle(s) are freed from the second tube segment and can return along the service pathway 9.

The second tube segment can be positioned on the same transportation pathway as the first tube segment, adjacent to the first tube segment and upstream along the longitudinal axis X. The first and second segments can then be connected to one another, preferably in an airtight connection. Alternatively, the second tube segment is positioned on the other transportation pathway, at the second extremity of the substructure and on the side of the first tube segment.

The next tube segments are conveyed and positioned similarly until the last tube segment is positioned at the first extremity of the substructure.

All the tube segments 14 of the first assembly 12 can be conveyed and positioned in a first step (step b) before all the tube segments 14 of the second assembly 13 are conveyed and positioned in a second step (step c). Alternatively, steps b and c are done simultaneously. For example, tube segments 14 of the first assembly 12 and tube segments 14 of the second assembly 13 are alternately conveyed and positioned. In particular, if the tube segments of both assemblies are identical, they can be conveyed one after the other and positioned alternately on the first transportation pathway and on the second transportation pathway.

According to a first embodiment of the superstructure assembling, the tube segments are stocked only at the stocking site 15 and conveyed from the stocking site. In that case, the vehicles are set up at the first extremity of the substructure with tube segments and they convey them from this first extremity to their use position. Each tube segment can be conveyed along either the first transportation pathway 7 or the second transportation pathway 10 and then positioned adjacent to an already-positioned tube segment in order to form the first assembly of tube segments and the second assembly of tube segments. One way to erect the superstructure is to convey tube segments of the first assembly of tube segments along the first transportation pathway while tube segments of the second assembly of tube segments are conveyed along the second transportation pathway. It further speeds up the erecting process and limit the move of tube segments at their use position.

According to a second embodiment of the superstructure assembling, at least some of the tube segments are stocked on one transportation pathway among the first one and the second one. Stocking the tube segments on one transportation pathway doesn't prevent the girders, platforms and tube segments from being conveyed along the other transportation pathway. Doing so helps minimizing the size of the stocking site. In that case, the tubes segments are conveyed from their stocking position, which is either at the stocking site 15 or on the transportation pathway. Consequently, the vehicles are set up with tube segments at the stocking position of each tube segment and they convey them from this stocking position to their use position along the other transportation pathway. Each tube segment is then positioned adjacent to an already-positioned tube segment, either on the first transportation pathway or on the second transportation pathway, in order to form the first assembly of tube segments and the second assembly of tube segments. In order to ease the assembling, the tube segments are positioned alternately on first transportation pathway and on the second transportation pathway, so that the first assembly and the second assembly are of similar length. The vehicles freed from the tube segments return along the service pathway 9 to the stocking position of another tube segment to be set up.

In the case where the superstructure comprises a third assembly of tube segments 14 positioned on the first assembly and/or a fourth assembly of tube segments 14 positioned on the second assembly, the tube segments of all assemblies can be conveyed individually along the transportation pathways, as described above in different embodiments. At their use position, a tube segment of the first assembly is first positioned on the first transportation pathway 7 and then a tube segment of the third assembly is positioned on the tube segment of the first assembly. Similarly, a tube segment of the second assembly is first positioned on the second transportation pathway 10 and then a tube segment of the fourth assembly is positioned on the tube segment of the second assembly. Alternatively, each tube segment of the first assembly of tube segments is coupled to a tube segment of the second assembly of tube segments at the stocking position and the coupled segments are then conveyed along one of the transportation pathways, as described above in different embodiments. Similarly, each tube segment of the second assembly of tube segments is coupled to a tube segment of the fourth assembly of tube segments at the stocking position and the coupled segments are then conveyed along one of the transportation pathways. Tube segments of all assemblies can be identical to ease logistics.

## Claims

1. Method for erecting a portion (1) of a transportation structure comprising a first assembly (12) of tube segments (14) and a second assembly (13) of tube segments (14), both assemblies being capable of being placed under low air pressure and through which pods may travel substantially free of air friction, the method comprising:
- (a) erecting a substructure (2) comprising a plurality of piers (3), a first plurality (4) of girders (6) positioned on at least some of the piers and forming a first transportation pathway (7) running from a first extremity of the substructure to a second one, a second plurality (5) of girders (6) positioned on at least some of the piers and forming a second transportation pathway (10), running from the first extremity of the substructure to the second one, alongside the first transportation pathway and a plurality of platforms (8), either positioned on the piers or connected to the girders of the first and/or second transportation pathway, and forming a service pathway (9) running from the first extremity of the substructure to the second one, the erecting step comprising:
o (i) Starting from the first extremity, conveying with vehicle(s) (17) the nth girder of the first plurality of girders either along the first transportation pathway formed by the girders of the first plurality of girders previously positioned or along the second transportation pathway formed by the girders of the second plurality of girders previously positioned, positioning the nth girder at its use position and having the vehicle(s) return to the first extremity of the substructure along the service pathway (9),
o (ii) starting from the first extremity, conveying with vehicle(s) (17) the nth girder of the second plurality of girders along either the first transportation pathway or the second transportation pathway, positioning the nth girder at its use position and having the vehicle(s) return to the first extremity of the substructure along the service pathway,
o (iii) Starting from the first extremity, conveying with vehicle(s) (17) the yth platform (8) of the plurality of platforms along either the first transportation pathway or the second transportation pathway, positioning the yth platform at its use position and having the vehicle(s) return to the first extremity of the substructure along the service pathway (9),
- (b) conveying, with vehicle(s) (17), tube segments (14) of the first assembly (12) of tube segments along either the first transportation pathway or the second transportation pathway to the use position of each tube segment, positioning each tube segment and having the vehicle(s) return along the service pathway,
- (c) conveying, with vehicle(s) (17), tube segments (14) of the second assembly (13) of tube segments along either the first transportation pathway or the second transportation pathway, from the first extremity of the substructure to the use position of each tube segment, positioning each tube segment and having the vehicle(s) return along the service pathway.

2. Method according to claim 1 wherein the platforms (8) of the plurality of platforms forming the service pathway (3) are positioned on the piers (3).

3. Method according to claim 1 wherein the platforms (8) of the plurality of platforms forming the service pathway (9) are connected to the girders (6) of the first transportation pathway (7) and to the girders of the second transportation pathway (10).

4. Method according to any one of the preceding claims wherein the erecting step comprises, before sub-step i), a step of erecting the piers (3).

5. Method according to any one of the preceding claims wherein the erecting step comprises, before sub-step i), an additional sub-step wherein a first section of the substructure comprising at least a pier (3), at least a girder (6) from the first plurality (4) of girders, at least a girder (6) from the second plurality (5) of girders and at least a platform (8) is erected at a stocking site (15).

6. Method according to any one of the preceding claims wherein, in step a), the vehicles (17) are set up with the girders (6) and the platforms (8) at the first extremity of the substructure.

7. Method according to any one of the preceding claims wherein the girders (6) and the platforms (8) are positioned with a girder launcher crane (18) supported by the substructure (2) itself.

8. Method according to any one of the preceding claims wherein the nth girder (6) of the first plurality (4) of girders is positioned after the girder of the first transportation pathway (7) forming the second extremity of the substructure, the nth girder (6) of the second plurality (5) of girders is positioned after the girder of the first transportation pathway (7) forming the second extremity of the substructure and the yth platform (8) is positioned after the platform of the service pathway (9) forming the second extremity of the substructure.

9. Method according to any one of the preceding claims wherein, in steps b) and c), the vehicles (17) are set up with the tube segments (14) at the first extremity of the substructure.

10. Method according to any one of the preceding claims wherein, in steps b) and c), the vehicles (17) are set up with the tube segments (14) either at the first extremity of the substructure or at the stocking position of the tube segments on one transportation pathway among the first one and the second one.

11. Method according to any one of the preceding claims wherein steps b) and c) are done simultaneously.

12. Portion (1) of a transportation structure for pods travelling substantially free of air friction in an assembly of tube segments placed under low air pressure, the portion of the transportation infrastructure comprising:
- a substructure (2) comprising a plurality of piers (3), a first plurality (4) of girders (6) positioned on at least some of the piers and forming a first transportation pathway (7) running from a first extremity of the substructure to a second one, a second plurality (5) of girders (6) positioned on at least some of the piers and forming a second transportation pathway (10), running from the first extremity of the substructure to the second one, alongside the first transportation pathway and a plurality of platforms (8), either positioned on the piers or connected to the girders of the first and/or second transportation pathway, and forming a service pathway (9) running from the first extremity of the substructure to the second one,
- a superstructure (11) comprising a first assembly (12) of tube segments (14) positioned on the first transportation pathway and a second assembly (13) of tube segments (14) positioned on the second transportation pathway, both assemblies being capable of being placed under low air pressure and capable of allowing the circulation of pods travelling substantially free of air friction in the tube segments.

13. Portion of a transportation structure according to claim 12 wherein all the girders (6) of the first plurality (4) of girders are positioned successively and continuously one after the other along the longitudinal axis X of the portion of the transportation structure and all the girders (6) of the second plurality (5) of girders are positioned successively and continuously one after the other along the longitudinal axis X of the portion of the transportation structure.

14. Portion of a transportation structure according to claim 12 wherein each of the first and second transportation pathways is composed of two continuous tracks of girders (6), running parallel to one another.

15. Portion of a transportation structure according to any one of claims 12 to 14 wherein the superstructure comprises a third assembly of tube segments (14) positioned on the first assembly (12) of tube segments and/or a fourth assembly of tube segments (14) positioned on the second assembly (13) of tube segments.

## Patentansprüche

1. Verfahren zum Errichten eines Abschnitts (1) einer Transportstruktur, umfassend eine erste Anordnung (12) von Rohrsegmenten (14) und eine zweite Anordnung (13) von Rohrsegmenten (14), wobei beide Anordnungen in der Lage sind, unter niedrigen Luftdruck gesetzt zu werden und durch die sich Kapseln im Wesentlichen frei von Luftreibung bewegen können, das Verfahren umfassend:
- (a) Errichten eines Unterbaus (2), umfassend eine Vielzahl von Pfeilern (3), eine erste Vielzahl (4) von Trägern (6), die auf mindestens einigen der Pfeiler positioniert sind und einen ersten Transportweg (7) bilden, der von einem ersten Ende des Unterbaus zu einem zweiten Ende verläuft, eine zweite Vielzahl (5) von Trägern (6), die auf mindestens einigen der Pfeiler positioniert sind und einen zweiten Transportweg (10) bilden, der von dem ersten Ende des Unterbaus bis zu dem zweiten Ende entlang des ersten Transportwegs und einer Vielzahl von Plattformen (8) verläuft, die entweder auf den Pfeilern positioniert oder mit den Trägern des ersten und/oder des zweiten Transportwegs verbunden sind, und Bilden eines Servicewegs (9), der von dem ersten Ende des Unterbaus zu dem zweiten Ende verläuft, der Errichtungsschritt umfassend:
∘ (i) ausgehend von dem ersten Ende, Befördern des n-ten Trägers der ersten Vielzahl von Trägern mit Fahrzeug(en) (17) entweder entlang des ersten Transportwegs, der durch die Träger der ersten Vielzahl von Trägern gebildet wird, die zuvor positioniert wurden, oder entlang des zweiten Transportwegs, der durch die Träger der zweiten Vielzahl von Trägern gebildet wird, die zuvor positioniert wurden, Positionieren des n-ten Trägers in seiner Gebrauchsposition und Bewirken, dass das/die Fahrzeug(e) entlang des Servicewegs (9) zu dem ersten Ende des Unterbaus zurückkehren,
∘ (ii) ausgehend von dem ersten Ende, Befördern des n-ten Trägers der zweiten Vielzahl von Trägern mit Fahrzeug(en) (17) entweder entlang des ersten Transportwegs oder des zweiten Transportwegs, Positionieren des n-ten Trägers in seiner Gebrauchsposition und Bewirken, dass das/die Fahrzeug(e) entlang des Serviceweges zu dem ersten Ende des Unterbaus zurückkehren,
∘ (iii) ausgehend von dem ersten Ende, Befördern der y-ten Plattform (8) der Vielzahl von Plattformen mit Fahrzeug(en) (17) entweder entlang des ersten Transportwegs oder des zweiten Transportwegs, Positionieren der y-ten Plattform in ihrer Gebrauchsposition und Bewirken, dass das/die Fahrzeug(e) entlang des Servicewegs (9) zu dem ersten Ende des Unterbaus zurückkehren,
- (b) Befördern, mit Fahrzeug(en) (17), von Rohrsegmenten (14) der ersten Anordnung (12) von Rohrsegmenten entweder entlang des ersten Transportwegs oder des zweiten Transportwegs zu der Gebrauchsposition von jedem Rohrsegment, Positionieren jedes Rohrsegments und Bewirken, dass das/die Fahrzeug(e) entlang des Servicewegs zurückkehren,
- (c) Befördern, mit Fahrzeug(en) (17), von Rohrsegmenten (14) der zweiten Anordnung (13) von Rohrsegmenten entweder entlang des ersten Transportwegs oder des zweiten Transportwegs von dem ersten Ende des Unterbaus zu der Gebrauchsposition von jedem Rohrsegment, Positionieren jedes Rohrsegments und Bewirken, dass das/die Fahrzeug(e) entlang des Servicewegs zurückkehren.

2. Verfahren nach Anspruch 1, wobei die Plattformen (8) der Vielzahl von Plattformen, die den Serviceweg (3) bilden, auf den Pfeilern (3) positioniert sind.

3. Verfahren nach Anspruch 1, wobei die Plattformen (8) der Vielzahl von Plattformen, die den Serviceweg (9) bilden, mit den Trägern (6) des ersten Transportwegs (7) und mit den Trägern des zweiten Transportwegs (10) verbunden sind.

4. Verfahren nach einem der vorherigen Ansprüche, wobei der Errichtungsschritt vor Teilschritt i) einen Errichtungsschritt der Pfeiler (3) umfasst.

5. Verfahren nach einem der vorherigen Ansprüche, wobei der Errichtungsschritt vor Teilschritt i) einen weiteren Teilschritt umfasst, wobei ein erster Abschnitt des Unterbaus mit mindestens einem Pfeiler (3), mindestens einem Träger (6) aus der ersten Vielzahl (4) von Trägern, mindestens einem Träger (6) der zweiten Vielzahl (5) von Trägern und mindestens einer Plattform (8) an einem Lagerplatz (15) errichtet wird.

6. Verfahren nach einem der vorherigen Ansprüche, wobei in Schritt a) die Fahrzeuge (17) mit den Trägern (6) und den Plattformen (8) an dem ersten Ende des Unterbaus aufgestellt werden.

7. Verfahren nach einem der vorherigen Ansprüche, wobei die Träger (6) und die Plattformen (8) mit einem von dem Unterbau (2) an sich getragenen Trägerbewegungskran (18) positioniert werden.

8. Verfahren nach einem der vorherigen Ansprüche, wobei der n-te Träger (6) der ersten Vielzahl (4) von Trägern nach dem Träger des ersten Transportwegs (7) positioniert ist, der das zweite Ende des Unterbaus bildet, der n-te Träger (6) der zweiten Vielzahl (5) von Trägern nach dem Träger des ersten Transportweges (7) positioniert ist, der das zweite Ende des Unterbaus bildet, und die y-te Plattform (8) nach der Plattform des Servicewegs (9) positioniert ist, der das zweite Ende des Unterbaus bildet.

9. Verfahren nach einem der vorherigen Ansprüche, wobei in Schritt b) und c) die Fahrzeuge (17) mit den Rohrsegmenten (14) an dem ersten Ende des Unterbaus aufgestellt werden.

10. Verfahren nach einem der vorherigen Ansprüche, wobei in Schritt b) und c) die Fahrzeuge (17) mit den Rohrsegmenten (14) entweder an dem ersten Ende des Unterbaus oder an der Lagerposition der Rohrsegmente auf einem Transportweg zwischen dem ersten und dem zweiten Weg aufgestellt werden.

11. Verfahren nach einem der vorherigen Ansprüche, wobei Schritt b) und c) gleichzeitig erfolgen.

12. Abschnitt (1) einer Transportstruktur für Kapseln, die sich im Wesentlichen ohne Luftreibung in einer Anordnung von unter niedrigem Luftdruck stehenden Rohrsegmenten bewegen, der Abschnitt der Transportinfrastruktur umfassend:
- einen Unterbau (2), umfassend eine Vielzahl von Pfeilern (3), eine erste Vielzahl (4) von Trägern (6), die auf mindestens einigen der Pfeiler positioniert sind und einen ersten Transportweg (7) bilden, der von einem ersten Ende des Unterbaus zu einem zweiten Ende verläuft, eine zweite Vielzahl (5) von Trägern (6), die auf mindestens einigen der Pfeiler positioniert sind und einen zweiten Transportweg (10) bilden, der von dem ersten Ende des Unterbaus bis zu dem zweiten Ende entlang des ersten Transportwegs und einer Vielzahl von Plattformen (8) verläuft, die entweder auf den Pfeilern positioniert oder mit den Trägern des ersten und/oder des zweiten Transportwegs verbunden sind, und Bilden eines Servicewegs (9), der von dem ersten Ende des Unterbaus zu dem zweiten Ende verläuft,
- einen Aufbau (11), umfassend eine erste Anordnung (12) von Rohrsegmenten (14), die auf dem ersten Transportweg positioniert sind, und eine zweite Anordnung (13) von Rohrsegmenten (14), die auf dem zweiten Transportweg positioniert sind, wobei beide Anordnungen in der Lage sind, unter niedrigen Luftdruck gesetzt zu werden, und in der Lage sind, die Zirkulation von Kapseln zu ermöglichen, die sich im Wesentlichen frei von Luftreibung in den Rohrsegmenten bewegen.

13. Abschnitt einer Transportstruktur nach Anspruch 12, wobei alle Träger (6) der ersten Vielzahl (4) von Trägern nacheinander und kontinuierlich nacheinander entlang der Längsachse X des Abschnitts der Transportstruktur angeordnet sind und alle Träger (6) der zweiten Vielzahl (5) von Trägern nacheinander und kontinuierlich nacheinander entlang der Längsachse X des Abschnitts der Transportstruktur angeordnet sind.

14. Abschnitt einer Transportstruktur nach Anspruch 12, wobei jeder von dem ersten und dem zweiten Transportweg aus zwei durchgehenden Trägerbahnen (6) besteht, die parallel zueinander verlaufend.

15. Abschnitt einer Transportstruktur ach einem der Ansprüche 12 bis 14, wobei der Aufbau eine dritte Anordnung von Rohrsegmenten (14), die auf der ersten Anordnung (12) von Rohrsegmenten angeordnet ist, und/oder eine vierte Anordnung von Rohrsegmenten (14), die auf der zweiten Anordnung (13) von Rohrsegmenten angeordnet ist, umfasst.

## Revendications

1. Procédé pour ériger une partie (1) d'une structure de transport comprenant un premier ensemble (12) de segments tubulaires (14) et un deuxième ensemble (13) de segments tubulaires (14), les deux ensembles pouvant être placés sous une faible pression d'air et à travers lesquels des nacelles peuvent se déplacer sensiblement sans friction d'air, le procédé comprenant les étapes consistant à :
(a) ériger une sous-structure (2) comprenant une pluralité de piles (3), une première pluralité (4) de poutres (6) positionnées sur au moins certaines des piles et formant une première voie de transport (7) s'étendant d'une première extrémité de la sous-structure à une seconde, une seconde pluralité (5) de poutres (6) positionnées sur au moins certaines des piles et formant une seconde voie de transport (10) s'étendant de la première extrémité de la sous-structure à la seconde, le long de la première voie de transport et une pluralité de plateformes (8) positionnées sur les piles ou raccordées aux poutres de la première et/ou seconde voie de transport, et formant une voie de service (9) s'étendant de la première extrémité de la sous-structure à la seconde, l'étape d'érection comprenant les étapes consistant à :
(i) à partir de la première extrémité, transporter, avec le(s) véhicule(s) (17), la n^{ième} poutre de la première pluralité de poutres le long de la première voie de transport formée par les poutres de la première pluralité de poutres préalablement positionnées ou le long de la seconde voie de transport formée par les poutres de la seconde pluralité de poutres préalablement positionnées, positionner la n^{ième} poutre dans sa position d'utilisation et faire revenir le(s) véhicule(s) à la première extrémité de la sous-structure le long de la voie de service (9),
(ii) à partir de la première extrémité, transporter, avec le(s) véhicule(s) (17), la n^{ième} poutre de la seconde pluralité de poutres le long de la première voie de transport ou de la seconde voie de transport, positionner la n^{ième} poutre dans sa position d'utilisation et faire revenir le(s) véhicule(s) à la première extrémité de la sous-structure le long de la voie de service,
(iii) à partir de la première extrémité, transporter, avec le(s) véhicule(s) (17), la y^{ième} plateforme (8) de la pluralité de plateformes le long de la première voie de transport ou de la seconde voie de transport, positionner la y^{ième} plateforme dans sa position d'utilisation et faire revenir le(s) véhicule(s) à la première extrémité de la sous-structure le long de la voie de service (9),
(b) transporter, avec le(s) véhicule(s) (17), les segments tubulaires (14) du premier ensemble (12) de segments tubulaires le long de la première voie de transport ou de la seconde voie de transport dans la position d'utilisation de chaque segment tubulaire, positionner chaque segment tubulaire et faire revenir le(s) véhicule(s) le long de la voie de service,
(c) transporter, avec le(s) véhicule(s) (17), les segments tubulaires (14) du deuxième ensemble (13) de segments tubulaires le long de la première voie de transport ou de la seconde voie de transport, de la première extrémité de la sous-structure dans la position d'utilisation de chaque segment de tube, positionner chaque segment tubulaire et faire revenir le(s) véhicule(s) le long de la voie de service.

2. Procédé selon la revendication 1, dans lequel les plateformes (8) de la pluralité de plateformes formant la voie de service (3) sont positionnées sur les piles (3).

3. Procédé selon la revendication 1, dans lequel les plateformes (8) de la pluralité de plateformes formant la voie de service (9) sont raccordées aux poutres (6) de la première voie de transport (7) et aux poutres de la seconde voie de transport (10).

4. Procédé selon l'une quelconque des revendications précédentes, dans lequel l'étape d'érection comprend, avant la sous-étape i), une étape pour ériger les piles (3).

5. Procédé selon l'une quelconque des revendications précédentes, dans lequel l'étape d'érection comprend, avant la sous-étape i), une sous-étape supplémentaire dans laquelle une première section de la sous-structure comprenant au moins une pile (3), au moins une poutre (6) de la première pluralité (4) de poutres, au moins une poutre (6) de la seconde pluralité (5) de poutres et au moins une plateforme (8) est érigée sur un site d'entreposage (15).

6. Procédé selon l'une quelconque des revendications précédentes, dans lequel, à l'étape a), les véhicules (17) sont mis en place avec les poutres (6) et les plateformes (8) à la première extrémité de la sous-structure.

7. Procédé selon l'une quelconque des revendications précédentes, dans lequel les poutres (6) et les plateformes (8) sont positionnées avec une grue lance-poutre (18) supportée par la sous-structure (2) elle-même.

8. Procédé selon l'une quelconque des revendications précédentes, dans lequel la n^{ième} poutre (6) de la première pluralité (4) de poutres est positionnée après la poutre de la première voie de transport (7) formant la seconde extrémité de la sous-structure, la n^{ième} poutre (6) de la seconde pluralité (5) de poutres est positionnée après la poutre de la première voie de transport (7) formant la seconde extrémité de la sous-structure et la y^{ième} plateforme (8) est positionnée après la plateforme de la voie de service (9) formant la seconde extrémité de la sous-structure.

9. Procédé selon l'une quelconque des revendications précédentes, dans lequel, aux étapes b) et c), les véhicules (17) sont mis en place avec les segments tubulaires (14) à la première extrémité de la sous-structure.

10. Procédé selon l'une quelconque des revendications précédentes, dans lequel, aux étapes b) et c), les véhicules (17) sont mis en place avec les segments tubulaires (14) à la première extrémité de la sous-structure ou dans la position d'entreposage des segments tubulaires sur une voie de transport parmi la première et la seconde.

11. Procédé selon l'une quelconque des revendications précédentes, dans lequel les étapes b) et c) sont réalisées simultanément.

12. Partie (1) d'une structure de transport pour nacelles se déplaçant sensiblement sans friction d'air dans un ensemble de segments tubulaires placés sous une faible pression d'air, la partie de l'infrastructure de transport comprenant :
- une sous-structure (2) comprenant une pluralité de piles (3), une première pluralité (4) de poutres (6) positionnées sur au moins certaines des piles et formant une première voie de transport (7) s'étendant d'une première extrémité de la sous-structure à une seconde, une seconde pluralité (5) de poutres (6) positionnées sur au moins certaines des piles et formant une seconde voie de transport (10) s'étendant de la première extrémité de la sous-structure à la seconde, le long de la première voie de transport et une pluralité de plateformes (8) positionnées sur les piles ou raccordées aux poutres de la première et/ou seconde voie de transport, et formant une voie de service (9) s'étendant de la première extrémité de la sous-structure à la seconde,
- une superstructure (11) comprenant un premier ensemble (12) de segments tubulaires (14) positionné sur la première voie de transport et un deuxième ensemble (13) de segments tubulaires (14) positionné sur la seconde voie de transport, les deux ensembles pouvant être placés sous une faible pression d'air et pouvant permettre la circulation des nacelles se déplaçant sensiblement sans friction d'air dans les segments tubulaires.

13. Partie d'une structure de transport selon la revendication 12, dans laquelle toutes les poutres (6) de la première pluralité (4) de poutres sont positionnées successivement et continuellement l'une après l'autre le long de l'axe longitudinal X de la partie de la structure de transport et toutes les poutres (6) de la seconde pluralité (5) de poutres sont positionnées successivement et continuellement l'une après l'autre le long de l'axe longitudinal X de la partie de la structure de transport.

14. Partie d'une structure de transport selon la revendication 12, dans laquelle chacune des première et seconde voies de transport est composée de deux pistes de poutres (6) s'étendant parallèlement entre elles.

15. Partie d'une structure de transport selon l'une quelconque des revendications 12 à 14, dans laquelle la superstructure comprend un troisième ensemble de segments tubulaires (14) positionné sur le premier ensemble (12) de segments tubulaires et/ou un quatrième ensemble de segments tubulaires (14) positionné sur le deuxième ensemble (13) de segments tubulaires.
